Europäisches Patentamt

European Patent Office

Office européen des brevets

(11) Publication number: **0 050 771**
**B1**

## EUROPEAN PATENT SPECIFICATION

(45) Date of publication of patent specification: **21.08.85**

(51) Int. Cl.⁴: **H 02 K 9/06, F 16 D 27/01**

(21) Application number: **81108148.8**

(22) Date of filing: **09.10.81**

(54) **Rotating electric machinery.**

(30) Priority: **24.10.80 JP 149584/80**

(43) Date of publication of application:
**05.05.82 Bulletin 82/18**

(45) Publication of the grant of the patent:
**21.08.85 Bulletin 85/34**

(84) Designated Contracting States:
**CH FR GB LI**

(56) References cited:
**DE-A-1 563 049**
**DE-A-1 613 060**
**DE-A-2 653 459**
**DE-A-2 821 973**
**DE-B-1 188 191**
**FR-A-2 355 205**
**GB-A-1 268 444**
**US-A-3 456 141**

(73) Proprietor: **MITSUBISHI DENKI KABUSHIKI KAISHA**
**2-3, Marunouchi 2-chome Chiyoda-ku Tokyo 100 (JP)**

(72) Inventor: **Sekine, Yasuhiro Mitsubishi Denki K.K.**
**Itami Seisakusho No. 80, Aza-Nakano Minamishi-mizu Amagasaki-shi Hyogo-ken (JP)**
Inventor: **Kuwayama, Masayuki Mitsubishi Denki K.K.**
**Itami Seisakusho No. 80, Aza-Nakano Minamishi-mizu Amagasaki-shi Hyogo-ken (JP)**
Inventor: **Harada, Hiroshi Mitsubishi Denki K.K.**
**Itami Seisakusho No. 80, Aza-Nakano Minamishi-mizu Amagasaki-shi Hyogo-ken (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath Maximilianstrasse 58 D-8000 München 22 (DE)**

Courier Press, Leamington Spa, England.

## Description

The invention is related to a rotary electrical machine comprising a stator, a rotor having a rotor shaft driven by a torque caused by magnetic coupling with said stator and a fan for feeding cooling air rotatably mounted on said rotor shaft by means of a bearing.

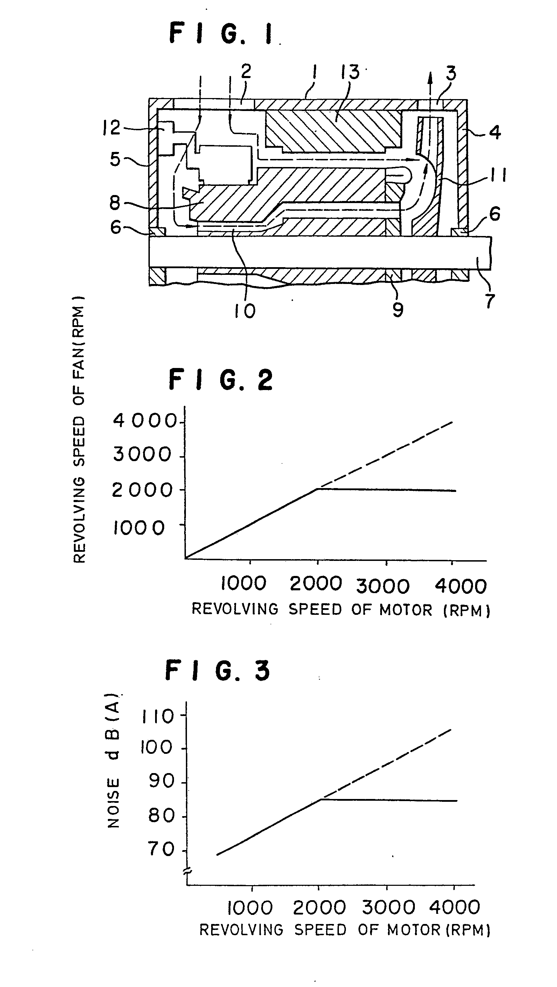

Heretofore, a rotary electrical machine used for an electric car such as a traction motor has a structure shown in Figure 1, wherein the reference numeral 1 designates a yoke, 2 designates a suction hole formed on the yoke 1; 3 designates an exhaust hole formed on the yoke 1; 4 and 5 respectively designate end brackets formed at each end of the yoke 1; 6 designates a bearing formed on each end bracket 4, 5; 7 designates a shaft supported by the bearing 6, 8 designates a rotor consisting of an iron core, a coil and an commutator connected to a spider 9, 10 designates an air-passage formed in the rotor 8 and the rotor spider 9, 11 designates a fan fixed to the shaft 7, 12 designates a brush device equipped with the end bracket 4 to contact the commutator and 13 designates a stator consisting of an iron core formed on the yoke 1 and of a coil.

In the motor having the aforementioned structure, the fan 11 is driven depending upon the rotation of the rotor 8 whereby the air sucked from the air suction hole 2 is passed through the space between the rotor 8 and the stator 13 and the air passage 10 as shown by the broken arrow line to cool the heated rotor 8 and the stator 13. The air heated by cooling said rotor and stator is discharged through the exhaust hole 3 by the rotating fan 11.

The traction motor for an electric car is usually driven in a range of 0 to 4000 r.p.m. In the conventional traction motor, the fan 11 is fixed to the shaft 7. Therefore, the fan 11 rotates at the same revolving speed as that of the traction motor as shown by the broken line in Figure 2. The noise caused by the revolving of the traction motor increases depending upon an increase of the revolving speed as shown by the broken line in Figure 3. The air blow sound caused by the fan is considered as the main factor of the noise. In the conventional traction motor
the following relation is given;

Noise of　　revolving　　　　revolving
motor　∝ speed of fan = speed of motor

The conventional traction motor has the disadvantage that the noise increases depending upon the increase of the revolving speed.

From GB—A—1 268 444 a heat engine ventilating device is known, comprising in combination with a driven fan rotor and a co-axial shaft driven by the engine to be cured, a magnetic coupling between the shaft and the rotor for conveying torque without mechanical contact. This magnetic coupling comprises an inductor having at least two complimentary poles and an induced member being of a permanent magnet material the inductor and the induced member being fixed to the shaft and to the driven rotor, respectively, or vice versa. This arrangement provides a slip coupling drive of the driven fan rotor by the shaft beyond a maximal predetermined torque, the slippage being exploited to dissipate more heat from the engine.

The problem to be solved by the invention is to improve a rotary electrical machine as specified in the generic portion of claim 1 in such a way that its noise is reduced at high rotational speed.

This task is solved by the features in the characterizing portion of claim 1.

A rotary electrical machine according to the invention produces less noise because the speed of revolution of the fan is limited to a predetermined value. The invention enables on the one hand to supply sufficient cooling air to the members of the rotary electrical machine to be cooled and on the other hand, to avoid the noise passing a certain noise level. Furthermore, the rotational speed of the rotary electrical machine according to the invention is not restricted because the limitation on the rotational speed of the fan does not depend upon the rotational speed of the rotor shaft of the electrical machine.

Embodiments for carrying out the invention are described in detail below with reference to drawings, in which:

Figure 1 is a front view of a rotary electrical machine;

Figure 2 is a graph showing the relation of the revolving speed of the traction motor and a fan;

Figure 3 is a graph showing the relation of the revolving speed of the traction motor and the noise of the motor;

Figure 4 is a front view of one embodiment of a rotary electrical machine of the present invention;

Figure 5 is a view of a partial arrangement;

Figure 6 is a vector of the magnet and the magnetic material;

Figures 7 and 8 are respectively front view of other embodiments of the present invention.

Referring to the drawings, the embodiments of the present invention will be illustrated.

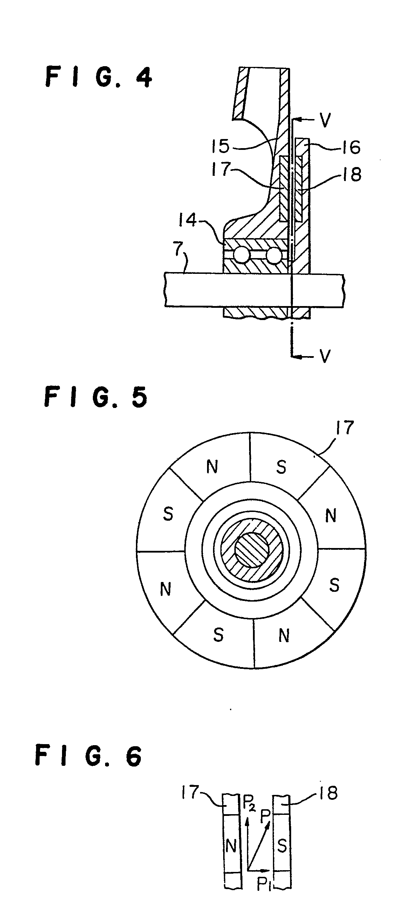

In Figure 4, the reference numeral 7 designates a shaft of the rotor, 14 designates a ball bearing fitted on to the shaft 7, 15 designates a fan which is rotatably mounted by means of the ball bearing 14 to the shaft 7, 16 designates a rotating support member fitted to the shaft 7 to face the fan 15 with a desired gap, 17 designates a permanent magnet fitted on a surface which is substantially perpendicular to the axis of shaft 7 of the fan 15. A plurality of pairs of permanent magnets 17 comprising N- and S-magnetic poles is shown in Figure 5. A magnetic material 18 is fitted to a rotating support member 16 to face the permanent magnet 17 and is made of a material having a predetermined coercive force. A magnetic pole is induced by the permanent magnet, which pole has a polarity opposite to the polarity of the permanent magnet 17 on the surface in proportion to the corresponding area of the magnet 17 as shown in Figure 6.

In the embodiment having the aforementioned structure, an S-pole is induced on the magnetic material 18 facing the N-pole of the permanent magnet 17 as shown in Figure 6 for the construction shown in Figure 4.

When the magnetic material 18 having the mentioned properties is rotated by $\Delta x$ with respect to the permanent magnet, the S-pole remains at the position and the inclined attractive force is acting between the permanent magnet 17 and the magnetic material as shown in Figure 6. The attractive force acts on the permanent magnet 17 as a tension force P. The component $P_2$ of the tension force P in the direction of the tangent is applied as the torque for rotating the permanent magnet 17. The force component $P_2$ and therewith the torque increases depending upon an increase of the coercive force of the magnetic material.

In Figure 6, $P=P_1$ and $P_2=0$ if the motor is not energized. The tension force P acts between the magnetic material 18 having a coercive force and the permanent magnet 17 due to the rotation of shaft 7 of the motor and the fan 15 is rotated by the force component $P_2$ of the tension force P. When the torque required for the rotation of the fan 15 is predetermined and revolving speed of the motor reaches a value such, that the torque conveyed to the fan 15 is smaller than the predetermined torque a slippage of the fan 15 will occur. Therefore, even though the revolving speed of the motor increases, the revolving speed of the fan 15 is limited to the maximum revolving speed given by the predetermined torque.

When the torque for the revolving speed of the fan 15 at 2000 r.p.m. is set to 2000, the revolving speed of the fan 15 increases to 2000 r.p.m., the same as that of the motor, however, the fan 15 is driven at the constant revolving speed of 2000 r.p.m. even though the revolving speed of the motor increases over 2000 r.p.m. The revolving speed of the fan 15 is set by the predetermined torque controlled by the magnetic force of the permanent magnet 17 and the width of the gap between the permanent magnet 17 and the magnetic material 18. Therefore, the noise (dB) of the motor increases depending upon an increase of the revolving speed of the fan 15 to reach 2000 r.p.m. and the noise level is kept substantially constant even though the revolving speed of the motor increases over 2000 r.p.m.

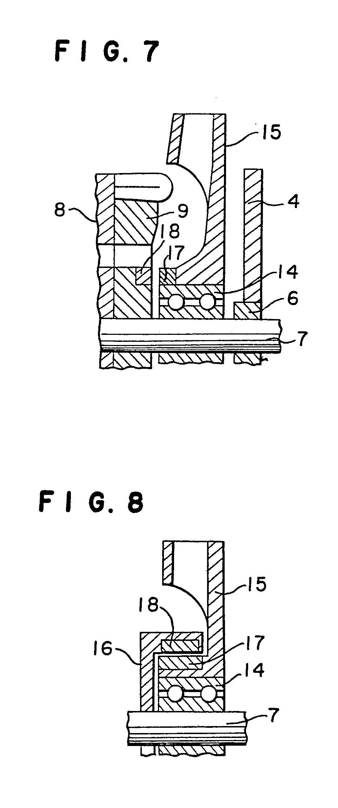

Figures 7 and 8 show other embodiments of the present invention.

In the embodiment shown in Figure 7, the magnetic material 18 is fitted to the rotor spider 9 to face the permanent magnets 17 fitted to the fan 15 whereby an extension of the motor in the axial direction is prevented in same manner as with the aforementioned embodiment.

In the embodiment shown in Figure 8, the permanent magnets 17 and the magnetic material 18 are arranged to face each other in the circumferential direction of the rotation of the rotor 8 whereby the same effect of the aforementioned embodiment is attained.

In the embodiments, the permanent magnets are fitted to the fan and the magnetic material is fitted to the rotor. However, the same effects of the embodiments are attained by fitting the magnets and the magnetic material to the other ones of the rotor and the fan.

In accordance with the present invention, the fan is connected through the bearing to the shaft and at least one pair of magnets having a predetermined magnetic force and the magnetic substance having a predetermined coercive factor magnetized by the facing magnet, are respectively fitted to the rotor and the fan to face each other, whereby the fan is driven by the predetermined torque resulsted by the rotation of the rotor. The torque of the fan is not increased over a predetermined level. Even though the revolving speed of the motor increases, the noise level is maintained to prevent the noise at high speed range of the revolving speed of the motor.

**Claims**

1. A rotary electrical machine comprising a stator (13), a rotor (8) having a rotor shaft (7) driven by a torque caused by magnetic coupling with said stator (13) and a fan (15) for feeding cooling air rotatably mounted on said rotor shaft (7) by means of a bearing (14) characterized in that at least one pair of permanent magnets (17) having opposite polarities is secured on either said fan (15) or said rotor (8) and a magnetic material (18) is secured to the other one of said fan (15) or said rotor (8) and facing said permanent magnets (17) with an air gap, between them, the magnitude of the magnetic force of said pair of permanent magnets (17) and the dimension of said air gap being such as to prevent the rotational speed of said fan (15) from passing a predetermined value even though the rotational speed of said rotor (8) increases beyond the predetermined value.

2. The rotary electrical machine according to claim 1 characterized in that said rotor is an armature rotor (8) having a rotor spider (9) and said magnetic material (18) is fixed to said rotor spider (9).

3. The rotary electrical machine according to claim 1 characterized in that said motor is a rotating support member (16) mounted on the rotor shaft (7) and said permanent magnets (17) or said magnetic material (18) is fixed to said rotating support member (16).

4. The rotary electrical machine according to claim 1 characterized in that said permanent magnets (17) are facing said magnetic material (18) on an axis substantially perpendicular to the axis of said rotor (8).

5. The rotary electrical machine according to claim 1 characterized in that said magnets (17) are facing said magnetic material (18) on a circumferential surface of said rotor (8) in the radial direction.

6. The rotary electrical machine according to claim 1 characterized in that said machine is a traction motor.

**Patentansprüche**

1. Rotierende, elektrische Maschine mit einem Stator (13), einem Rotor (8), der eine Rotorwelle (7) aufweist, die durch ein durch magnetische Kopplung mit dem Stator (13) bewirktes Drehmoment antreibbar ist, und einem Ventilator (15) zum Zuführen von Kühlluft, der mittels eines Lagers (14) drehbar auf der Rotorwelle (7) befestigt ist dadurch gekennzeichnet, daß wenigstens ein Paar von entgegengesetzte Polaritäten aufweisenden Permanentmagneten (17) an dem Ventilator (15) und mit einem Luftspalt den Permanentmagneten (17) gegenüberliegend ein magnetisches Material (18) an dem Rotor (8) oder umgekehrt befestigt sind, wobei die Größe der Magnetkraft des Paares von Permanentmagneten (17) und die Abmessung des Luftspaltes derart sind, daß verhindert wird, daß die Drehzahl des Ventilators (15) einen vorbestimmten Wert überschreitet, selbst wenn die Drehzahl des Rotors (8) über den vorbestimmten Wert hinaus zunimmt.

2. Rotierende, elektrische Maschine nach Anspruch 1, dadurch gekennzeichnet, daß der Rotor ein Ankerrotor (8) mit einem Rotorstern (9) ist und das magnetische Material (18) an dem Rotorstern (9) befestigt ist.

3. Rotierende, elektrische Maschine nach Anspruch 1, dadurch gekennzeichnet, daß der Rotor ein sich drehendes, auf der Rotorwelle (7) befestigtes Trägerteil (16) ist und daß die Permanentmagnete (17) oder das magnetische Material (18) an dem sich drehenden Trägerteil (16) befestigt sind bzw. ist.

4. Rotierende, elektrische Maschine nach Anspruch 1, dadurch gekennzeichnet, daß die Permanentmagnete (17) dem magnetischen Material (18) auf einer zu der Achse des Rotors (8) im wesentlichen senkrechten Achse gegenüberliegen.

5. Rotierende, elektrisch Maschine nach Anspruch 1, dadurch gekennzeichnet, daß die Magnete (17) dem magnetischen Material (18) auf einer Umfangsfläche des Rotors (8) in radialer Richtung gegenüberliegen.

6. Rotierende, elektrische Maschine nach Anspruch 1, dadurch gekennzeichnet, daß die Maschine ein Fahrzeugmotor ist.

**Revendications**

1. Machine électrique rotative comprenant un stator (13), un rotor (8) muni d'un arbre de rotor (7) entraîné par un couple résultant d'un couplage magnétique avec ledit stator (13) et un ventilateur (15) monté à rotation sur ledit arbre de rotor (7), par l'intermédiaire d'un palier (14), pour fournir de l'air de refroidissement, caractérisée en ce qu'au moins une paire d'aimants permanents (17), présentant des polaritiés opposées, est fixée soit sur ledit ventilateur (15), soit sur ledit rotor (8), et un matériau magnétique (18) est fixé sur le second de ces organes, à savoir respectivement ledit rotor (8) ou ledit ventilateur (15) en faisant face auxdits aimants permanents (17) avec un intervalle d'air entre eux, l'intensité de la force magnétique de ladite paire d'aimants permanents (17) et la dimension dudit intervalle d'air étant calculées de telle façon à empêcher la vitesse de rotation dudit ventilateur (15) de dépasser une valeur prédéterminée même si la vitesse de rotation dudit rotor (8) croît au-delà de la valeur prédéterminée.

2. Machine électrique rotative selon la revendication 1, caractérisée en ce que ledit rotor est un rotor à induit (8) comportant une armature (9) de rotor et ledit matériau magnétique (18) fixé à ladite armature (9) de rotor.

3. Machine électrique rotative selon la revendication 1, caractérisée en ce que ledit rotor est un élément de support rotatif (16) monté sur l'arbre (7) du rotor et lesdits aimants permanents (17) ou ledit matériau magnétique (18) est fixé audit élément de support rotatif (16).

4. Machine électrique rotatif selon la revendication 1, caractérisée en ce que lesdits aimants permanents (17) sont placés en face dudit matériau magnétique (18) sur un axe sensiblement perpendiculaire à l'axe dudit rotor (8).

5. Machine électrique rotative selon la revendication 1, caractérisée en ce que lesdits aimant (17) sont placés en face dudit matériau magnétique (18) sur une surface de la circonférence dudit rotor (8), dans la direction radiale.

6. Machine électrique rotative selon la revendication 1, caractérisée en ce que ladite machine est un moteur de traction.

# F I G. I

# F I G. 2

REVOLVING SPEED OF FAN (RPM)

REVOLVING SPEED OF MOTOR (RPM)

# F I G. 3

NOISE d B (A)

REVOLVING SPEED OF MOTOR (RPM)

# F I G. 4

15
16
17
18
14
7
V
V

# F I G. 5

17
N
S
S
N
N
S
N
S

# F I G. 6

17
18
P₂
P
N
S
P₁

2

# F I G. 7

# F I G. 8